# EUROPEAN PATENT APPLICATION

(11) **EP 2 620 856 A1**
(43) Date of publication of application: **31.07.2013**
(21) Application number: 11826747.5
(22) Date of filing: 09.09.2011
(51) Int. Cl.: G06F 3/048, G06F 3/044

(54) **DISPLAY DEVICE, DISPLAY METHOD, PROGRAM FOR THE DEVICE AND THE METHOD, AND TERMINAL DEVICE**

(30) Priority: 22.09.2010 JP 2010211806
(71) Applicant: NEC CASIO Mobile Communications, Ltd., Kawasaki-shi Kanagawa 211-8666 (JP)
(72) Inventor: HASUI Ryoji, Kawasaki-shi Kanagawa 211-8666 (JP)
(74) Representative: Vossius & Partner
(86) International application number: PCT/JP2011/070584
(87) International publication number: WO 2012/039301

(57) **Abstract**

Provided is a display device, which detects the proximity state of a display screen and an object on the display screen, based on capacitance detected by means of a capacitance detecting unit configured on the display screen, and corresponding to the proximity state, the display device determines one user interface to control out of a plurality of user interface screens that are displayed in layers on the display screen.

## Description

### TECHNICAL FIELD

The present invention relates to a display device, a display method, a program for the device and the method, and a terminal device, which control user interface screens being displayed.

### BACKGROUND ART

Many portable terminals equipped with touch sensors exist in current information terminal markets. In particular, in portable terminals belonging to the class of smart phones which have increased recently, the number of key devices in hardware is small, and most operations of the terminal are configured to be performed on a display with a touch sensor (touch panel device).

Operations of a user interface (UI) using a touch panel sensor are basically realized by a user by performing any one of a touch operation (bringing their finger or an operation tool for a touch panel (hereinafter referred to as an operation tool) into contact with a touch sensor), a drag operation (moving their finger or the operation tool in the state in which their finger or the operation tool is in contact with the touch sensor), and a release operation (separating their finger or the operation tool from the touch sensor), or a combination thereof. Thereby, an object displayed on the display is then selected or moved. These operations are frequently used in general UIs. In the operations of the UI using the touch panel sensor, many objects (operable component icons such as a button, a list, or a slide bar SB) are mixed and displayed on the UI, and erroneous operations or false recognitions of operation objects of the user may occur.

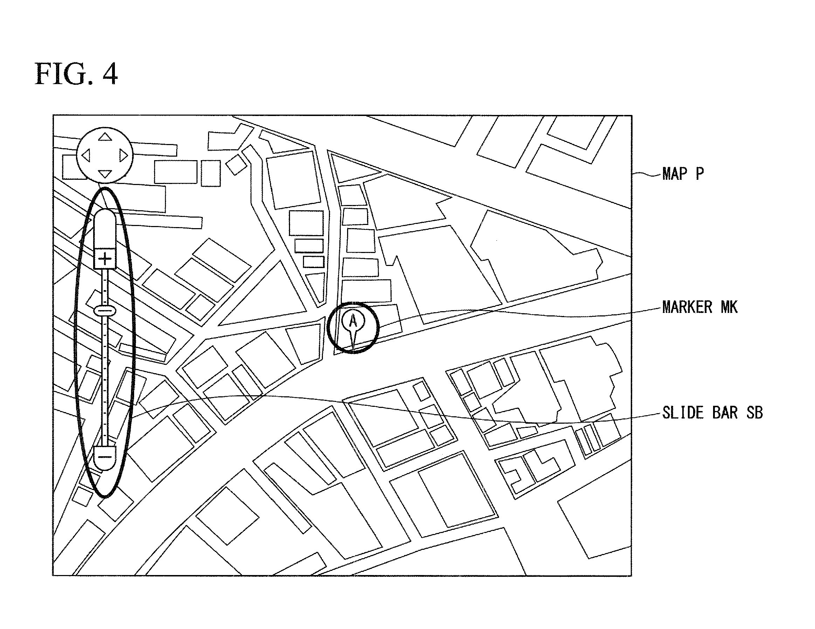

As an example, FIG. 4 illustrates a case in which a map application of a UI is displayed on a display device. The map application has a marker function allowing a user to freely locate a marker on the map P and has a slide bar SB for enlarging or reducing the map P or the like located and displayed on the map. In this map application, the user scrolls the map P on the display by dragging the map when the user wants to move a display position of the map P. In addition, the user moves the marker by dragging a marker object when the user wants to move the marker MK. In addition, the user drags the scale adjustment knob of the slide bar SB to operate the scale when the user wants to enlarge or reduce the map P.

For example, in a case in which the user tries to operate the slide bar SB for enlarging or reducing the map P, when the user is in contact with the vicinity of the boundary line, this may be recognized as not a vertical drag operation of the slide bar SB but a movement operation of the map P. As a result, an erroneous operation causing the map P to be moved may occur in contradiction to the enlargement or reduction operation of the map P which the user intends to perform. In order to prevent this erroneous operation, a scheme is proposed in which the button for changing a mode is disposed on the map application and the mode is switched among a movement mode of the map P, a movement mode of the marker MK, and an operation mode of the slide bar SB.
However, this scheme may cause the operation to be complicated and may cause confusion for the user. In general, a plurality of operable objects is included on the same Ul, but it is necessary to provide a Ul that can reduce erroneous operations by virtue of simpler and more intuitive operations.
In addition, a technique associated with the present application is described in Patent Document 1.

### [Prior Art Document]

### [Patent Document]

Patent Document 1: Japanese Unexamined Patent Application Publication, No. 2008-128544 A

### DISCLOSURE OF THE INVENTION

### [Problems to be Solved by the Invention]

An object of the present invention is to provide a display device, a display method, a program for the device and the method, and a terminal device, which can solve the problems mentioned above.

### [Means for Solving the Problems]

To achieve the object mentioned above, a display device of the present invention includes a proximity state detection unit that detects a proximity state between a display screen and an object on the display screen based on an electrostatic capacitance detected by an electrostatic capacitance detection unit configured on the display screen; and a control user interface (UI) determination unit that determines which of a plurality of UI screens displayed in layers on the display screen is controlled in response to the proximity state.

In addition, the present invention provides a display method, which includes detecting a proximity state between a display screen and an object on the display screen based on an electrostatic capacitance detected by an electrostatic capacitance detection unit configured on the display screen; and determining which of a plurality of UI screens displayed in layers on the display screen is controlled in response to the proximity state.

In addition, the present invention provides a program for causing a computer of a display device to function as: a proximity state detection unit that detects a proximity state between a display screen and an object on the display screen based on an electrostatic capacitance detected by an electrostatic capacitance detection unit configured on the display screen; and a control UI determination unit that determines which of a plurality of UI screens displayed in layers on the display screen is controlled in response to the proximity state.

In addition, the present invention provides a terminal device, which includes a proximity state detection unit that detects a proximity state between a display screen and an object on the display screen based on an electrostatic capacitance detected by an electrostatic capacitance detection unit configured on the display screen; and a control UI determination unit that determines which of a plurality of UI screens displayed in layers on the display screen is controlled in response to the proximity state.

### [Effects of the Invention]

According to the present invention, a UI of a general purpose application has a plurality of layers, the layer of the operable UI screen displayed in the 3D stereoscopic liquid crystal display (LCD) 11 is switched in conformity with a distance of a user's finger or an operation tool of a touch panel such as a stylus (hereinafter referred to as an operation tool) from the touch panel device, and thus the UI screen in the lower layer can be operated when the touch panel device itself is in contact with the user's finger or the operation tool. In addition, it is possible to realize the operation for the UI screen in the upper layer intuitive to the user by operating the user's finger or the operation tool in a space above the touch panel device without bringing the user's finger or the operation tool into contact with the touch panel device.
In addition, according to the present invention, it is possible to separate an object such as a displayed icon into another layer, thereby reducing erroneous operations such as erroneous selections of objects by the user.

### BRIEF DESCRIPTION OF THE DRAWINGS

FIG. 1 is a block diagram illustrating a configuration of a display device according to an embodiment of the present invention.
FIG. 2 is a diagram illustrating an example of a UI screen displayed by a display device according to an embodiment of the present invention.
FIG. 3 is a flowchart illustrating processes of a display device according to an embodiment of the present invention.
FIG. 4 is a diagram illustrating an example of a UI screen displayed by a conventional display device.

### EMBODIMENTS FOR CARRYING OUT THE INVENTION

Hereinafter, a display device according to an embodiment of the present invention will be described with reference to drawings.

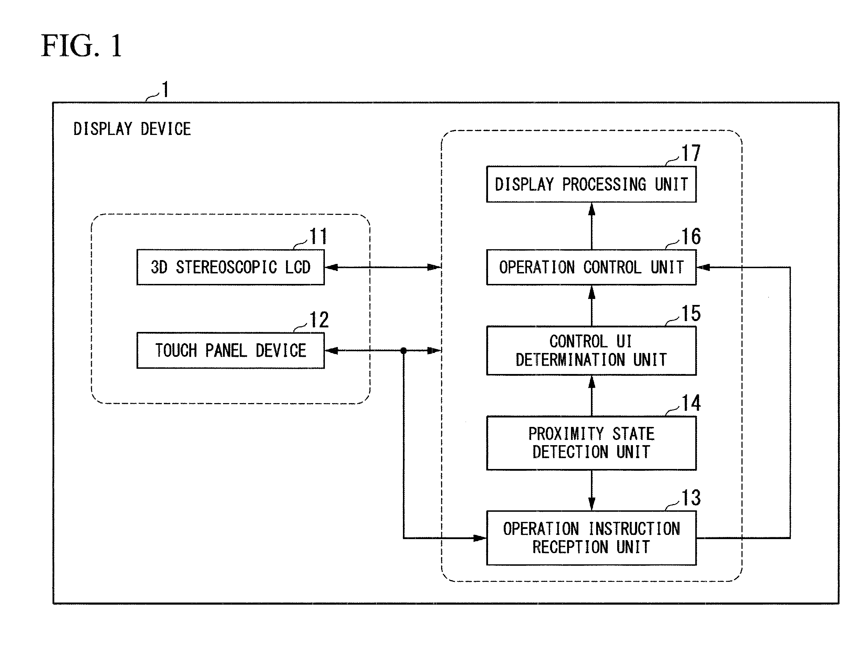

FIG. 1 is a block diagram illustrating a configuration of a display device according to the embodiment.
Referring to FIG. 1, reference numeral 1 denotes the display device. The display device 1 includes functional units or processing units such as a 3D stereoscopic LCD 11, a touch panel device (an electrostatic capacitance detection unit) 12, an operation instruction reception unit 13, a proximity state detection unit 14, a control UI determination unit 15, an operation control unit 16, and a display processing unit 17.

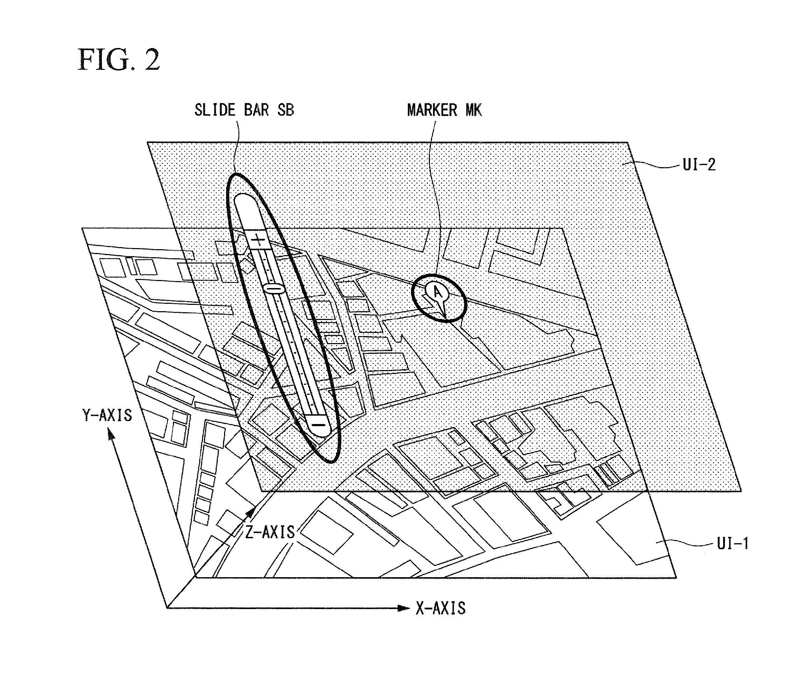

The 3D stereoscopic LCD 11 is a functional unit that displays a plurality of interface screens output from a display unit in layers.
In addition, the touch panel device 12 is a functional unit that detects an operation instruction by virtue of an operation tool or a finger of the user, and so forth. The touch panel device 12 detects an electrostatic capacitance of any of a plurality of point electrodes disposed in a matrix on the display when the user approaches the touch panel device with their finger or the operation tool, thereby detecting that the operation tool or the finger of the user is approaching the position of the point electrode of which the electrostatic capacitance is detected.
In addition, the 3D stereoscopic LCD 11 and the touch panel device 12 are configured to overlap in layers (see FIG. 2). The display screens are thus configured. In addition, touch, drag, and release operations are performed on desired positions of the user on the UI screens displayed by the 3D stereoscopic LCD 11 by the user's finger or the operation tool. At this time, an operation instruction is input by detecting the electrostatic capacitance by means of the touch panel device 12.

In addition, the operation instruction reception unit 13 generates and outputs information on the operation instruction based on the signal input from the touch panel device 12.
In addition, the proximity state detection unit 14 detects the proximity state of the operation tool or the finger of the user based on the electrostatic capacitance of any point electrode within the display output from the touch panel device 12.
In addition, the control UI determination unit 15 determines which of a plurality of UI screens displayed in the 3D stereoscopic LCD 11 is controlled based on the proximity state detected by the proximity state detection unit.
In addition, the operation control unit 16 controls the UI screen determined by the control UI determination unit 15 based on the operation instruction input from the operation instruction reception unit 13.
In addition, the display processing unit 17 is a processing unit that displays the UI screen displayed in the 3D stereoscopic LCD 11 based on the control of the operation control unit 16.

The display device 1 according to the present embodiment detects the proximity state between the 3D stereoscopic LCD 11 and the user's finger or the operation tool on the 3D stereoscopic LCD 1 based on the electrostatic capacitance detected by the electrostatic capacitance detection unit configured within the 3D stereoscopic LCD 11. In addition, the display device I determines which of a plurality of UI screens displayed in layers by the 3D stereoscopic LCD is controlled in response to the proximity state between the 3D stereoscopic LCD and the user's finger or the operation tool on the 3D stereoscopic LCD 11. Based on the operation instruction performed on the UI screen by the user, the display device I then performs the operation control corresponding to the operation instruction on the UI screen determined to be controlled. According to this process, a display device that can reduce erroneous operations by virtue of simpler and more intuitive operations is provided.

Hereinafter, the process flow of`the display device will be described in order.
In the present embodiment, the display device 1 detects touch/non-touch between the touch panel device 12 and the user's finger or the operation tool, has a function of detecting touch/proximity/non-proximity from the amount of change in electrostatic capacitance based on detection of the electrostatic capacitance instead of the function of detecting the operation instruction, and thus detects the operation instruction corresponding to the detected result based on the detected result of the touch/proximity/non-proximity.

In addition, in the display device 1 of the present embodiment, it is necessary for the user to simply perform an operation of moving their finger or the operation tool in the space (air) above the touch panel device 12. In this case, when the vertical direction of the touch panel device 12 is designated as a Z axis (see FIG. 2), the electrostatic capacitance of the point electrode of the touch panel device 12 changes in response to a distance in the Z-axis direction from the touch panel device 12 to the operation tool of the finger of the user. More specifically, the change in electrostatic capacitance becomes greater as the distance in the Z-axis direction is shorter, and the change in electrostatic capacitance which is detected becomes smaller as the distance in the Z-axis direction is longer. When the position of the operation tool or the user's finger in the Z-axis direction is classified according to the change in electrostatic capacitance, the user may finely adjust the distance to operate the object such that the distance corresponds to the proper UI screen among the plurality of UI screens at the time of operating objects such as icons displayed in the UI screen.
However, it is considered that the operability may be degraded due to the necessity to finely adjust the distance such that the distance of the user's finger or the operation tool on the Z axis is suitable.

Accordingly, in the present embodiment, separately from the function of detecting the distance of the user's finger or the operation tool on the Z axis by virtue of the electrostatic capacitance, a plurality of UI screens are configured in a plurality of layers, and a function of switching the operable UI layer in response to the distance of the user's finger or the operation tool on the Z axis is provided. In the present embodiment, three states such as the touch state, the proximity state (the touch panel and the user's finger or the operation tool are not in contact with each other but are within a predetermined distance from each other), and the non-proximity state of the user's finger or the operation tool are set to be classified and recognized, the number of the UI layers cooperating with the state is made to be small, and it is thus possible to reduce the erroneous operations due to false recognition of the operation tool or the finger of the user on the Z axis.

In addition, although three states such as the touch state, the proximity state, and the non-proximity state are classified by the magnitude of change in electrostatic capacitance between the touch panel and the operation tool or the user's finger in the present embodiment, mores states than three may be classified. However, when the classification becomes finer as described above, the operability of the user becomes worse.

FIG. 2 illustrates an example of the UI screens displayed by the display device.
As shown in FIG. 2, a plurality of user interface screens (hereinafter referred to as UI screens) are displayed in layers. An example in which two UI screens in a lower layer (a touch panel:UI-1) and an upper layer (UI-2) are displayed in layers is illustrated in FIG. 2. In this case, the UI-1 screen in the lower layer is a screen displaying the map P. In addition, the UI-2 screen in the upper layer is a screen displaying two icons such as the slide bar SB for enlarging or reducing the map P and the marker MK set on the map P by the user. In addition, the slide bar SB is a bar-shaped icon, opposite ends of which are indicated with + and -. The slide bar SB may enlarge or reduce the scale of the map P when the scale adjustment knob within the slide bar SB is slid toward the + side or the - side. In addition, the marker MK is an icon that the user displays to be marked on the map P.
The display processing unit 17 of the display device 1 performs the process by overlapping and displaying the plurality of UI screens in layers as shown in FIG. 2.

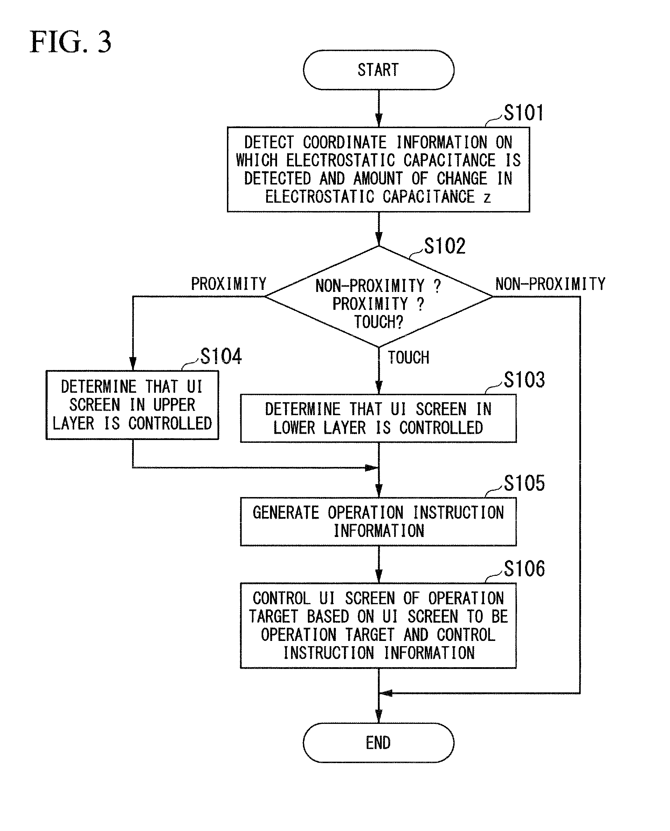

FIG. 3 is a diagram illustrating a process flow of the display device.
Next, the process flow of the display device according to the present embodiment will be described in order.
First, the user uses their finger or the operation tool to operate the UI screens displayed in the display device I. In this case, the touch panel device 12 detects information of the coordinate (x,y) in which the electrostatic capacitance is detected and the amount of change in electrostatic capacitance z of the point electrode at the position of the coordinate (step S101), and outputs the result to the proximity state detection unit 14. The proximity state detection unit 14 then performs proximity state determination on any of whether or not a distance between the touch panel device 12 and the operation tool or the finger of the user is great (non-proximity), whether or not the operation tool or the finger of the user approaches the touch panel device (proximity), or whether or not the operation tool or the finger of the user is in contact with the touch panel device (touch) based on the amount of change in electrostatic capacitance z input from the touch panel device 12 (step S102).

In the present embodiment, the proximity state detection unit 14 stores two-phased thresholds (z1,z2) for determining the proximity state based on the input amount of change in electrostatic capacitance z. The proximity state detection unit 14 then uses the maximum threshold of the amount of change in electrostatic capacitance z as z_max when determining the proximity state. It is determined to be the non-proximity when the input amount of change in electrostatic capacitance z satisfies 0 ≤ z < z1. It is determined to be the proximity when the input amount of change in electrostatic capacitance z satisfies z1 ≤ z < z2. It is determined to be the touch when the input amount of change in electrostatic capacitance z satisfies z2 ≤ z ≤ z_max. The proximity state detection unit 14 then outputs information on the proximity state (information indicating any of the non-proximity state, the proximity state, and the touch state) serving as the determination result to the control UI determination unit 15. In addition, the proximity state detection unit 14 does not output the information regarding the non-proximity state when the proximity state is determined to be the non-proximity state.

Next, the control UI determination unit 15 specifies the input proximity state from the proximity state information upon receipt of the proximity state information from the proximity state detection unit 14. In the present embodiment, the proximity state corresponds to any of the proximity state and the touch state. The control UI determination unit 15 then determines that the UI-1 screen in the lower layer among the plurality of UI screens overlapping in layers is controlled when it is determined that the proximity state is the touch (step S103), or determines that the UI-2 screen in the upper layer is controlled when it is determined that the proximity state is the proximity (step S104). The control UI determination unit 15 then outputs the information on the UI screen determined to be a control target (information indicating the upper layer or the lower layer) to the operation control unit 16.

Meanwhile, the operation instruction reception unit 13 receives the coordinate information (x,y) converted from the electrostatic capacitance and the amount of change in electrostatic capacitance z from the touch panel device 12. The operation instruction reception unit then generates operation instruction information in which that information is stored (step S105), and outputs the operation instruction information to the operation control unit 16.

The operation control unit 16 then controls the UI screen of the operation target based on the UI screen serving as the operation target and the control instruction information (step S106). For example, when the UI screen serving as the operation target is the UI-2 screen in the upper layer shown in FIG. 2 and the electrostatic capacitance is changed in the same coordinate as the marker MK, for example, the operation control unit determines that the marker MK is selected and designated, and outputs the operation control information indicating the selection of the marker MK to the display processing unit 17. The display processing unit 17 then controls the selection of the marker MK by displaying the brightness of the marker MK to be dark, for example. Accordingly, the display in which the marker MK is selected is made on the UI-2 screen (upper layer) displayed in the 3D stereoscopic LCD 11.

The operation control unit 16 then sequentially outputs the operation control information to the display processing unit 17 based on the coordinate in which the electrostatic capacitance is changed, the amount of change in electrostatic capacitance, or the like, and the display processing unit 17 performs the display process on the UI screen based on the operation control information, so that the display changes in the 3D stereoscopic LCD 11. In addition to selection of the marker MK, for example, the change of the scale of the map P or the like is performed by changing the position of the marker MK (touch + drag + release) or changing the position of the scale adjustment knob within the slide bar SB (touch + drag + release). In addition, in the case of changing the scale of the map P, the process of enlarging or reducing the scale of the map P is performed in response to the amount of change in position of the scale adjustment knob within the slide bar SB based on the change in position of the scale adjustment knob within the slide bar SB.
In addition, in the case in which the proximity state is the touch, the UI-1 screen in the lower layer is selected, and the operation control on the selected UI-1 screen in the lower layer is performed. In addition, the process mentioned above is repeated until the power source is turned off.

The process of the display device 1 according to the present embodiment has been described. However, according to the process described above, the UI of the general purpose application may be provided with a plurality of layers, and the layer of the operable UI screen to be displayed in the 3D stereoscopic LCD 11 may be switched in conformity with the distance between the UI and the user's finger or the operation tool. Accordingly, the UI screen in the lower layer may be operated when the user's finger or the operation tool is in contact with the touch panel device itself, and the UI screen in the upper layer may be operated when the user's finger or the operation tool is operated in the space above the touch panel device without bringing the touch panel device into contact with the user's finger or the operation tool. It is thus possible to realize the operation more intuitive to the user.
In addition, according to the example described above, since the UI screens are processed to be divided into a plurality of layers, objects disposed on the same layer as in the conventional structure are separated into individual layers, and it is thus possible to reduce erroneous operations such as erroneous selections of objects by the user.
In addition, the display device described above may be disposed within a terminal such as a PDA or a mobile phone.

The display device described above has a computer system therein. The procedure of each process described above is stored in a computer-readable recording medium in a program format, and the process is performed by the computer reading and executing the program. In this case, the computer-readable recording medium includes a magnetic disk, a magneto optical disc, a CD-ROM, a DVD-ROM, a semiconductor memory, or the like. In addition, the computer program may be delivered to the computer by a communication line, and the computer that has received the delivery may perform the delivered program.

In addition, the program described above may be one for realizing some of the functions described above.
In addition, the program may be a differential file (differential program), that is, one that can be realized by combining the functions described above with the program that is already stored in the computer system.
The application claims priority to and the benefit of Japanese Patent Application No. 2010-211806 filed on September 22, 2010, the disclosure of which is incorporated herein by reference.

### INDUSTRIAL APPLICABILITY

It is possible to provide a display device that can reduce erroneous operations by virtue of simple and intuitive operations.

### [Description of Reference Numerals]

| | |
|---|---|
| 1 | display device |
| 11 | 3D stereoscopic LCD |
| 12 | touch panel device |
| 13 | operation instruction reception unit |
| 14 | proximity state detection unit |
| 15 | control UI determination unit |
| 16 | operation control unit |
| 17 | display processing unit |

## Claims

1. A display device comprising:
a proximity state detection unit that detects a proximity state between a display screen and an object on the display screen based on an electrostatic capacitance detected by an electrostatic capacitance detection unit configured on the display screen; and
a control user interface (UI) determination unit that determines which of a plurality of UI screens displayed in layers on the display screen is controlled in response to the proximity state.

2. The display device according to Claim 1, wherein the proximity state detection unit detects one of a touch state, a proximity state, and a non-proximity state based on an amount of change in the electrostatic capacitance.

3. The display device according to Claim 2, wherein the control UI determination unit determines that a UI screen in a lower layer of two UI screens displayed in layers is controlled when the proximity state is the touch state, and determines that a UI screen in an upper layer of the two UI screens is controlled when the proximity state is the proximity state.

4. The display device according to any one of claims 1 to 3, further comprising:
an operation instruction reception unit that receives an operation instruction on the UI screen, and
an operation control unit that performs an operation control corresponding to the operation instruction received by the operation instruction reception unit for the UI screen determined to be controlled.

5. A display method of a display device comprising:
detecting a proximity state between a display screen and an object on the display screen based on an electrostatic capacitance detected by an electrostatic capacitance detection unit configured on the display screen; and
determining which of a plurality of UI screens displayed in layers on the display screen is controlled in response to the proximity state.

6. A program for causing a computer of a display device to function as:
a proximity state detection unit that detects a proximity state between a display screen and an object on the display screen based on an electrostatic capacitance detected by an electrostatic capacitance detection unit configured on the display screen; and
a control UI determination unit that determines which of a plurality of UI screens displayed in layers on the display screen is controlled in response to the proximity state.

7. A terminal device comprising:
a proximity state detection unit that detects a proximity state between a display screen and an object on the display screen based on an electrostatic capacitance detected by an electrostatic capacitance detection unit configured on the display screen; and
a control UI determination unit that determines which of a plurality of UI screens displayed in layers on the display screen is controlled in response to the proximity state.
